**Europäisches Patentamt**

**European Patent Office**

**Office européen des brevets**

(19)

(11) Numéro de publication: **0 017 586**
**B1**

(12) # FASCICULE DE BREVET EUROPEEN

(45) Date de publication du fascicule du brevet: **28.03.84**

(51) Int. Cl.³: **G 06 F 13/00,** G 06 F 11/00

(21) Numéro de dépôt: **80400441.4**

(22) Date de dépôt: **02.04.80**

(54) Appareil de traitement de données comportant deux mémoires à accès direct coopérant aussi bien en mode lecture qu'en mode écriture.

(30) Priorité: **06.04.79 FR 7908716**

(43) Date de publication de la demande:
**15.10.80 Bulletin 80/21**

(45) Mention de la délivrance du brevet:
**28.03.84 Bulletin 84/13**

(84) Etats contractants désignés:
**DE GB IT**

(56) Documents cités:
DE - A - 2 237 671
DE - A - 2 714 314
FR - A - 2 083 696
FR - A - 2 412 107
GB - A - 1 254 929
US - A - 2 843 841
US - A - 3 213 427
US - A - 3 633 175

IBM TECHN. DISCL. BULL., vol. 4, no. 6 avril 1959, New York, US, VAN MECHELEN: "Use of the logic bit", pages 1,2

(73) Titulaire: **COMPAGNIE INTERNATIONALE POUR L'INFORMATIQUE CII - HONEYWELL BULL (dite CII-HB)**
**94, avenue Gambetta**
**F-75020 Paris (FR)**

(72) Inventeur: **Bavoux, Robert Jules Adolphe**
**11 avenue Otis-Mygatt**
**F-92500 Rueil Malmaison (FR)**
Inventeur: **Lemaire, Francis René Jean-Marie**
**9 rue du Bois**
**F-78370 Plaisir (FR)**
Inventeur: **Salkazanov, Pierre**
**3 rue des Ebisoires**
**F-78370 Plaisir (FR)**

(56) Documents cités:
IBM TECHN. DISCL. BULL., vol. 22, no. 1, juin 1979, New York, US, PARTRIDGE: "Full memory compare processor monitor circuit", pages 182,183
Motorola M 6800 Application Manual 1975, pages 1-5,1-8,4-48 à 4-56
Ralston "Encyclopedia of computer science", 1976, pages 389 à 392
Compcon 1976, février 24 à 26, Institute of Electrical and Electronics Engineers, Computers, Spring Conference 12, pages 113 à 117

Courier Press, Leamington Spa, England.

## Appareil de traitement de données comportant deux mémoires à accès direct coopérant aussi bien en mode lecture qu'en mode écriture

L'invention a pour objet un appareil de traitement de données comportant deux mémoires à accès direct dont la première contient des données et la deuxième contient des données supplémentaires associées aux données ayant la même adresse dans lequel les deux mémoires peuvent être accédées en utilisant de manière économique un bus commun de données et un bus commun d'adresses.

L'appareil selon la présente invention permet le fonctionnement coopératif de deux mémoires à accès direct aussi bien en mode lecture qu'en mode écriture. Il faut entendre par fonctionnement coopératif un fonctionnement dans lequel pour toute sollicitation de la première mémoire la deuxième mémoire est sollicitée de la même façon: la lecture du contenu d'une adresse de la première mémoire entraîne la lecture du contenu de la même adresse de la deuxième mémoire l'ecriture dans une adresse de la première mémoire entraîne l'ecriture dans la même adresse de la deuxième mémoire. Dans un tel mode de fonctionnement, la difficulté réside dans le fait que le processeur ne peut traiter qu'un seul mot à la fois. En général, le mot traité est le mot issu de ou destiné à la première mémoire. Dans ces conditions, en fonctionnement en mode coopératif, le mot issu de ou destiné à la deuxième mémoire risque d'être perdu. Par ailleurs, il peut se produire que le processeur doive modifier le contenu de la deuxième mémoire ce qui nécessite que cette deuxième mémoire soit accessible directement par le processeur. Pour résoudre ces problèmes, la présente invention propose un appareil de traitement de données dans lequel des moyens intermédiaires mémorisent les données de la deuxième mémoire. Pour permettre au processeur d'avoir accès à ces données, ces moyens intermédiaires sont raccordés aux omnibus du processeur qui peut ainsi les adresser et y extraire ou y introduire des données.

Cette invention s'applique notamment aux systèmes de traitement de donnés faisant appel aux microprocesseurs et dans lesquels des adresses prédéterminées de la mémoire adressable constituent des lieux particuliers et appellent de la part des microprocesseurs des traitements spécifiques obtenus généralement par appel de sous routines.

C'est le cas particulier de certains automates industriels destinés à contrôler, par exemple, une machine outil. Les addresses particulières sont, par exemple, les adresses de programme de contrôle pour lesquelles les commandes changent de destination: soit un changement d'outil, soit un changement de porte outil, soit un changement de mouvement.

C'est aussi le cas des dispositifs de contrôle des transferts de données entre les périphériques et la mémoire centrale d'un ordinateur. Les addresses particulières sont, par exemple, les adresses frontières des mémoires tampon destinées au transfert.

Dans de tels systèmes de traitement de données, l'unité de traitement, sous le contrôle d'un programme de traitement, puise les données au fur et à mesure de ses besoins dans une mémoire de données qui est une mémoire adressable. Cette mémoire contient des emplacements pour y loger les données à emmagasiner. Pour atteindre ces emplacements le microprocesseur définit leurs adresses. Au fur et à mesure de la progression du traitement, l'adresse des données demandées évolue. Il arrive souvent qu'il soit utile que l'unité de traitement soit avertie quand elle atteint certaines adresses prédéterminées que nous appellerons adresses particulières. Ces adresses constituent, notamment, des frontières comme par exemple la limite d'un registre et appellent des traitements spécifiques obtenus par exemple, par le branchement vers une sous-routine spécifique du programme.

Dans les systèmes de traitement de données actuels on fait face à cette situation en mettant en place un dispositif de surveillance des adresses en mémoire appelées par l'unité de traitement. Une méthode consiste à effectuer la comparaison systématique de toute adresse appelée avec les contenus d'un ou plusieurs registres; ces contenus représentent les adresses particulières à surveiller. Cette méthode réclame une opération de comparaison à chaque cycle de l'unité de traitement faisant appel à la mémoire. Cela représente un supplément de circuits et un perte de temps. Il y a accroissement du prix du système de traitement de l'information et ralentissement de sa vitesse de fonctionnement. Un autre méthode consiste à tenir la comptabilité de la distance qui sépare l'adresse de l'instruction courante de l'adresse particulière la plus proche au moyen d'un compteur. Chaque évolution de l'adresse courant fait varier le contenu du compteur dans le sens convenable. Le passage à zéro du compteur indique que l'adresse particulière est atteinte. Cette méthode présente les mémes inconvénients que la précédente.

Des appareils de traitement de données utilisant des mémoires fonctionnant en mode coopératif ont déjà été proposés.

Par exemple le brevet US 2,843,841 permet d'établir une coopération entre une mémoire principale (Permanent Store) et une mémoire auxiliaire (Erasable Store). La mémoire principale contient des données primaires et la mémoire auxiliare contient des données secondaires associées aux données primaires. Ces données secondaires constituent soit des modifications soit des compléments apportés aux données primaires ayant la même adresse.

Dans un tel système quand les circuits utilisateurs veulent obtenir les données contenues à une adresse déterminée ils sollicitent les deux mémoires simultanément. Ces deux mémoires répondent à cette sollicitation en délivrant leur contenu respectif correspondant à l'adresse indiquée. Si aucune données secondaire ne se trouve à cette adresse, cette situation est signifiée aux circuits utilisateurs (signal "NOT HERE"). Par contre, si des données secondaires s'y trouvent, celles-ci sont utilisées pour modifier ou compléter les données primaires.

Ce procédé a le mérite de ne pas nécessiter une mémoire ayant une longueur de mot capable de contenir à la fois les données primaires et les données secondaires.

Le brevet allemand No 2 237 671 apporte une solution nouvelle au problème de l'amélioration du rendement de fabrication des mémoires à semi-conducteurs.

Dans ce brevet est décrit un système de mémoire dit redondant. Ce système comporte une mémoire principale qui est la mémoire dont les défauts sont à corriger. Cette mémoire comporte des lignes redondantes: les lignes redondantes sont des lignes supplémentaires qui seront utilisées par une mémoire morte associative. Au moment du test de la mémoire principale si une ligne est trouvée défectueuse, l'adresse de cette ligne défectueuse est inscrite dans la mémoire morte par destruction de fusibles par exemple. De la sorte, quand ultérieurement, cette adresse est appelée, la mémoire associative d'une part inhibe la sélection de la ligne adressée de la mémoire et d'autre part sensiblise une des lignes de rechange où un enregistrement sans défaut peut être effectué. Ce système de mémoire est particulièrement bien adapté dans la fabrication de mémoire à base de semi-conducteurs car tous ses composants sont facilement intégrables. Toutefois, ce système ne permet qu'un nombre modéré de lignes de rechange et son usage n'est bien adapté qu'à l'acroissement du rendement des chaînes de fabrication des mémoires.

Le brevet US No 3 633 175 apporte une solution au problème des mémoires comportant des adresses défectueuses. Pour cela, une mémoire associative est jumelée avec la mémoire à corriger. Au cours des opérations de test de la mémoire à corriger, les adresses défectueuses sont relevées. A chaque adresse défectueuse est attribuée, par le canal de la mémoire associative, une adresse de remplacement. Ainsi, quand ultérierement, il est fait appel à une adresse défectueuse, cet appel est aiguillé vers l'adresse de remplacement. Ce système aporte un solution au problème des mémoires ayant un nombre relativement faible de défauts mais il s'avère impraticable dés que le nombre de défauts dépasse une certaine valeur.

Ces dispositifs font appel soit à une mémoire associative seule, soit à une mémoire associative commandant des lignes de mémoires supplémentaires.

Le brevet français 2 412 107 (publié le 13.7.1979) décrit un système de traitement de données comportant une mémoire (2) caractérisée par le fait que les mots enregistrés dans cette mémoire ont une longueur (m) supérieure à la longueur (n) des mots traités par le processeur (1). Cette mémoire (2) peut être considérée comme étant constitués de deux sous-ensembles fonctionnels distincts.

Un premier sous-ensemble est constitué par un bloc mémoire lecture/écriture contenant des mots de longueur n. Un deuxième sous-ensemble est constitué par un bloc mémoire lecture seule contenant des mots de longueur (m–n). Il est possible de considérer que ces deux sous-ensembles fonctionnent en mode coopératif, en mode lecture seulement, c'est-à-dire que, quand une adresse est appelée dans le premier sous-ensemble, la même adresse est appelée simultanément dans le deuxième sous-ensemble. Le premier sous-ensemble contient des données et le deuxième sous-ensemble contient des bits associés aux données du premier sous-ensemble adresse par adresse. Quand la processeur (1) appelle en lecture un mot de données dans le premier sous-ensemble, le duexième sous-ensemble est sollicité également et les bits associés aux données (c'est-à-dire situés à la même adresse) sont transmis sur une liaison multiple unidirectionnelle (30) spécialisée qui transmet ces bits associés (lu) d'une part vers l'automate logique (5) par l'omnibus (31) et d'autre part vers les opérateurs particuliers (7) par l'omnibus (32). Ces bits associés sont utilisés par l'automate logique (5) et/ou les opérateurs particuliers (7) pour définir leur intervention au niveau des données délivrées sur l'omnibus (13). Le dispositif décrit dans ce brevet permet d'obtenir un système de traitement de données pour lequel le traitement effectué sur les données contenues dans la mémoire (2) dépend de l'adresse où se trouvent placées les données dans cette mémoire (2). Les choses se passent d'une façon toute différente en mode écriture. En effet, il est à remarquer que le deuxième sous-ensemble où sont mémorisés les bits associés communique avec le reste du système de traitement de données par une liaison multiple unidirectionnelle (30) qui fonctionne exclusivement en mode lecture. Cette liaison multiple unidirectionnelle (30) est une liaison spécialisée réservée au transport des bits associés fournis par la lecture du deuxième sous-ensemble vers l'automate logique (5) et vers les opérateurs particuliers (7), cette liaison de par la description qui en est faite dans le brevet ne permet pas la communication entre le processeur et le deuxième sous-ensemble. Cette conception des circuits oblige donc à ce que le deuxième sous-ensemble soit· une mémoire inaltérable puisqu'elle est inaccessible aussi bien à l'écriture qu'à la réécriture. Ceci limite grandement les possibilités du système de traitement de données qui se voit amputé de la possibilité d'écrire pour effacer ou modifier les données contenues dans le deuxième sous-ensemble.

Il se trouve que dans les systèmes informatiques actuels, il est de plus en plus fréquent que le besoin se fasse sentir de disposer d'un système de traitement dans lequel deux mémoires coopèrent aussi bien en mode lecture qu'en mode écriture. C'est le cas par exemple des systèmes informatiques où il est nécessaire de particulariser certaines adresses de la mémoire des données: ces adresses sont particularisées par les données supplémentaires associées qui sont appelées indicateurs dans la description qui suit.

C'est pour satisfaire ce besoin que la présente invention propose un appareil de traitement de données comportant des moyens utilisateurs et deux mémoires à accès direct dont la première contient des données et la deuxième des données supplémentaires associées aux données ayant la adresse caractérisé par des moyens intermédiaires qui sont reliés

d'une part aux moyens utilisateurs par un bus d'adresse comme pour les deux mémoires et par un bus de données comme pour la première mémoire,
d'autre par à la deuxième mémoire au moyen d'un bus des indicateurs différés; de façon à ce que,
en fonctionnement dans le mode écriture pendant un premier cycle et sous le contrôle du bus d'adresses les données supplémentaires sont transférées depuis les moyens utilisateurs vers les moyens intermédiaires par le bus des données et,
pendant un deuxième cycle et sous le contrôle du bus d'adresses sont transférés
d'un côté, les données entre les moyens utilisateurs et la première mémoire à travers le bus de données, de l'autre côté, les données supplémentaires entre les moyens intermédiaires et la deuxième mémoire à travers le bus des indicateurs différés,
en fonctionnement dans le mode lecture les cycles et les transferts de données sont inversés par rapport à ceux du mode écriture.

L'invention est exposée ci-après plus en détail, à l'aide de dessins qui représentent seulement des modes de réalisation préférés de l'invention.

La figure 1 représente l'organigramme des opérations qui se déroulent dans un appareil de traitement de données selon un mode de réalisation.

La figure 2 est une représentation schématique d'un dispositif permettant l'application du procédé décrit sur la figure précédente.

La figure 3 est une représentation schématique d'une variante du dispositif représenté sur la figure 2.

La figure 4 représente schématiquement un exemple de réalisation de la variante de la figure 3 autour d'un microprocesseur Motorola MC 6800 (cf. Motorola M6800, Application Manual 1975, pages 1—5, 1—8, 4—48 à 4—56).

La figure 5 représente le détail des circuits de la mémoire des indicateurs et des circuits associés du dispositif de la figure 4.

La figure 6 représente le détail du contrôleur d'unificateur d'écriture de la figure 5.

La figure 7 représente le chronogramme des signaux électriques mis en oeuvre dans le fonctionnement des circuits précédents dans le cas d'une écriture en mémoire des indicateurs.

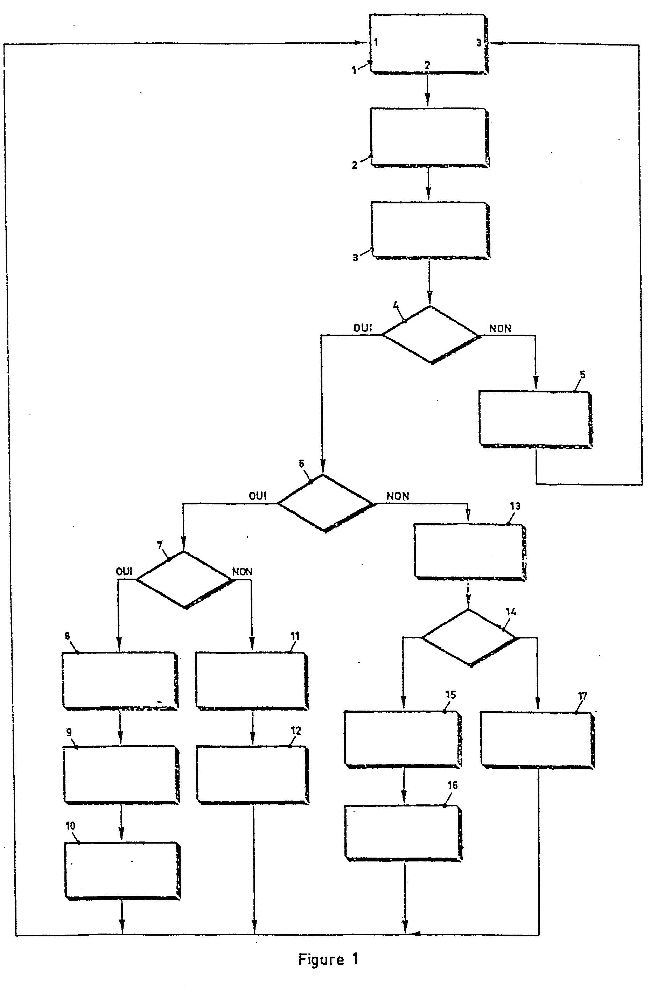

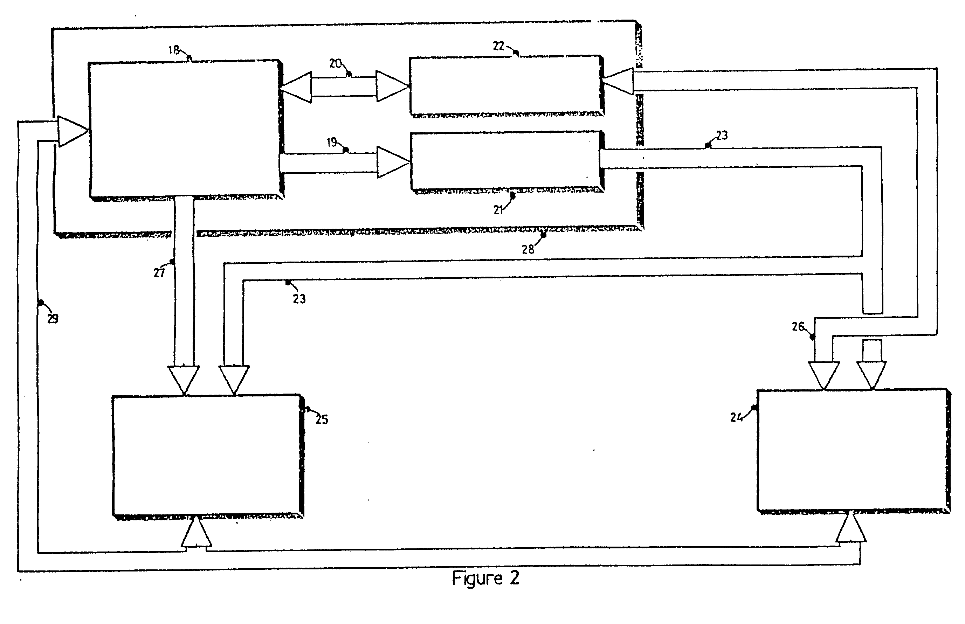

Pour illustrer le mode de travail de l'appareil de traitement selon la fig 2 la figure 1 représente l'organigramme des opérations qui se déroulent dans un système de traitement de données.

Sur la figure 1, on a représenté par le bloc (1) l'opération de définition de l'adresse de la prochaine instruction. Par les bornes (1) ou (3) du bloc (1) arrive l'autorisation d'entreprendre cette définition. Quand cette adresse est définie le système effectue l'acquisition de l'instruction contenue à cette adresse. Cette acquisition est représentée par le bloc (2). Cette opération est suivie de l'opération de décodification de l'instruction qui est représentée par le bloc (3). Cette décodification permet au système de connaître la nature des opérations définies par l'instruction. Il est ainsi possible de connaître si ces opérations réclament un cycle de le mémoire des données.

Si l'instruction ne fait pas appel à la mémoire, elle est exécutée en (5) et en fin d'exécution l'ordre est donné au programme de passer à l'instruction suivante par un signal de fin d'exécution appliqué sur l'entrée 3 du bloc (1).

Si l'instruction fait appel à la mémoire, il est examiné en (6) si le cycle mémoire demandé est un cycle lecture ou un cycle écriture.

S'il s'agit d'un cycle écriture, le système détermine en (7) si l'adresse appelée doit être affectée d'un indicateur associé à la donné contenue à cette adresse. Dans l'affirmative le système fait l'acquisition en (8) de la configuration de l'indicateur associé. Ensuite, le système fait l'acquisition en (9) de la donnée à emmaganiser dans la mémoire. Finalement, en (10) le système effectue d'une part le chargement de l'indicateur associé dans la mémoire des indicateurs, d'autre part, le chargement de la donnée dans la mémoire des données. Ces deux opérations de chargement étant terminées, le système stimule par l'entrée 1 du bloc (1) la progression du programme.

Si le cycle écriture ne comporte pas d'indicateur associé à la donnée à emmagasiner, le système effectue en (11) l'acquisition de la donnée à mémoriser, en (12) il effectue le chargement de la donnée dans la mémoire des données puis relance la progression du programme par la borne 1 du bloc (1).

Si le cycle demandé à la mémoire est un cycle de lecture, le système effectuera ce cycle en (13). Le résultat de ce cycle est examiné en (14).

Si le cycle a donné comme résultat une donnée et que l'adresse où a été trouvée cette donnée comporte un indicateur associé, cet indicateur est examiné en (15). Cet indicateur caractérise l'adresse lue et la microprocesseur effectue le traitement correspondant en (16). La fin de ce traitement relance par l'entrée (1) du bloc (1) le déroulement du programme.

Dans le cas où le cycle de lecture n'a pas révélé la présence d'un indicateur, la donnée obtenue est exploitée en (17) conformément à l'instruction chargée en (2). Une fois cette opération terminée, le contrôle est rendu au programme par sollicitation de l'entrée 1 du bloc (1).

En résumé, on peut dire que la mémoire des données comporte des adresses particularisées par des indicateurs. Cette particularisation est obtenue à l'écriture en associant aux adresses concernées un indicateur associé. A la lecture d'une addresse particularisée, l'appel de cette adresse particularisée fait apparaître l'indicateur associé à cette adresse. Cet indicateur fournit au système une information concernant l'adresse à laquelle l'indicateur est associé. Cet indicateur peut contenir, par exemple, l'indication de la limite d'une zone de mémoire.

Sur la figure 2 est représenté un système d'exploitation de données faisant application du procédé qui vient d'être décrit. Le système d'exploitation est représenté sous forme de blocs fonctionnels. Le bloc fonctionnel (28) représente les moyens utilisateurs de données. A l'intérieur de ce bloc sont représentés:

en (18) les circuits de traitement de données,
en (21) les circuits d'adressage,
en (22) le registre tampon d'entrée-sortie.

Les circuits de traitement de données (18) sont reliés par une liaison (19) aux circuits d'adressage (21), par une liaison (20) au registre tampon d'entrée-sortie (22), par une liaison (27) aux moyens (25) de particularisation et par une liaison (29) à la mémoire (24) des données et aux moyens (25) de particularisation. La liaison (27) est l'omnibus des indicateurs et la liaison (29) est l'omnibus de contrôle. La sortie des circuits (21) d'adressage alimente l'omnibus (23) d'adressage. La sortie du registre tampon (22) alimente l'omnibus (26) des données. L'omnibus (23) d'adressage est raccordé à la mémoire (24) des données et aux moyens (25) de particularisation. La mémoire (24) des données possède donc trois entrées attaquées respectivement par l'omnibus (23) des adresses, l'omnibus (29) de contrôle et l'omnibus (26) des données. Les moyens (25) de particularisation possèdent également 3 entrées attaquées respectivement par l'omnibus (23) des adresses l'omnibus (29) de contrôle et l'omnibus (27) des indicateurs.

Quand les circuits (18) de traitement veulent échanger des données avec les mémoires (24) des données et un indicateur avec les moyens (25) de particularisation, ils placent l'adresse de l'emplacement, où se trouvent les données et l'indicateur précité, sur la liaison (19) qui alimente le circuit (19) d'adressage, ces derniers alimentent l'omnibus (23) d'adressage qui vient d'une part adresser un emplacement dans la mémoire (24) des données et d'autre part, adresser un emplacement dans les moyens (25) de particularisation, on voit que l'adresse de deux emplacements est la même adresse dans ces deux dispositifs. Il suffit pour les moyens de particularisation d'avoir un emplacement disponible pour chacune des données à particulariser afin d'y inscrire l'indicateur correspondant. Par ailleurs, les circuits (18) de traitement placent sur l'omnibus (29) de contrôle les signaux définissant la nature du cycle de fonctionnement demandés à la mémoire (24) et ainse moyens de particularisation (25). Si les circuits (18) de traitement désirent obtenir un cycle d'écriture, ils doivent avant de commander ce cycle d'écriture, d'un part, placer la donnée à emmagasiner sur la liaison (20) qui vient charger le registre tampon (22) d'entrée-sortie de données qui à son tour transmet la donnée à l'omnibus (26) des données et d'autre part, s'il s'agit d'une donné à particulariser, placer l'indicateur correspondant à cette adresse sur l'omnibus (27 des indicateurs. Ces opérations terminées, les circuits (18) de traitement lancent le cycle écriture qui introduit respectivement la donnée placée sur l'omnibus (26) de données dans la mémoire (24) de données et l'indicateur placé sur l'omnibus (27) des indicateurs dans les moyens (25) de particularisation.

On voit donc de ce qui vient d'être décrit, que les circuits (18) de traitement peuvent, au cours d'un cycle écriture, charger en mémoire (25) des données une donnée et, si l'adresse appelée est à particulariser charger les moyens (25) de particularisation avec l'indicateur correspondant à cette adresse. Cet indicateur sera appelé par la suite indicateur associée à l'adresse particularisée.

Dans le cas d'un cycle de lecture les opérations d'adressage sont les mêmes qui ci-dessus mais sur l'omnibus du contrôle les circuits (18) de traitement commande un cycle de lecture. Les circuits (18) de traitement lancent alors un cycle de lecture. Ce cycle de lecture place à la sortie de la mémoire (24) des données, par conséquent sur l'omnibus (26) des données, la donnée qui est contenue dans l'emplacement adressé. L'omnibus (26) des données transmet cette donnée lue au registre tampon (22) d'entrée-sortie qui à son tour, à travers la liaison (20), transmet cette donnée au circuit (18) de traitement.

Parallèlement, un cycle de lecture a également été exécuté dans les moyens (25) de particularisation. Si dans l'emplacement adressé, qui se trouve donc à une adresse associée à celle de la donnée, se trouve un indicateur, ce qui prouve qu'il s'agit d'une adresse particularisée, cet indicateur est placé à la sortie des moyens (25) de particularisation et du même coup, transmis par l'omnibus (27) aux circuits (18) de traitement. Si la lecture de cette adresse des moyens (25) de particularisation ne fournit pas d'indicateur, cela signifie que cette adresse n'est pas une adresse particularisée et aucun signal n'est fourni à l'omnibus (27) des indicateurs.

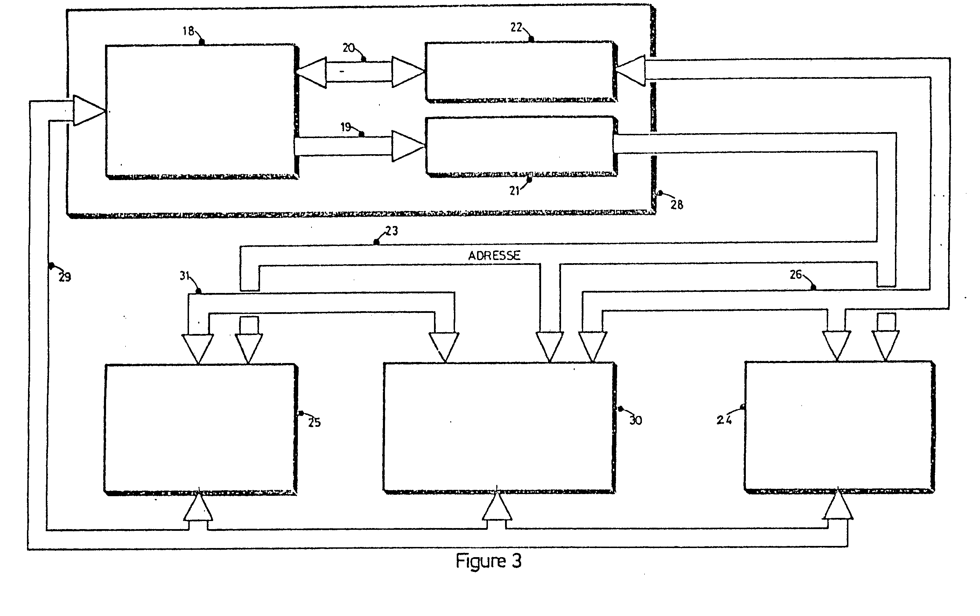

Sur la figure 3 est représentée une variante du système représenté sur la figure 2. Dans cette variante des moyens (30) intermédiaires ont été interposés entre les moyens (28) utilisateurs et les moyens (25) de particularisation. La transmission des indicateurs ne se fait plus directement à travers un omnibus (28) des indicateurs. Les moyens (25) de particularisation sont reliés à l'omnibus (23) d'adresse, à l'omnibus (29) de contrôle et à l'omnibus (31) des indicateurs différés. L'omnibus (31) des indicateurs différés est relié à son autre extrémité aux moyens (30) intermédiaires. Ces moyens (30) intermédiaires reçoivent également l'omnibus (23) d'adresse et l'omnibus (26) des données.

Quand les dispositifs (28) utilisateurs veulent écrire une donnée dans la mémoire (24) des données en associant à l'adresse appelée un indicateur, ils procèdent de la façon suivante. Ils placent, sur l'omnibus (23) d'adresses, l'adresse des moyens (30) intermédiaires il placent sur l'omnibus (26) des données l'indicateur à associer à l'adresse associée et sur l'omnibus (29) de contrôle l'ordre d'exécuter un cycle d'écriture. Cet ensemble de signaux appliqués sur les moyens (30) intermédiaires va provoquer l'introduction de l'indicateur dans les moyens (30) intermédiaires. Au cycle suivant les moyens (28) utilisateurs placent l'adresse de la donnée à écrire en mémoire (24) des données sur l'omnibus (23) d'adresses, la donnée à écrire en mémoire (24) des données sur l'omnibus (26) des données, l'ordre d'exécuter un cycle d'écriture sur l'omnibus (29) de contrôle. Cet ensemble de signaux appliqués sur la mémoire (24) des données et sur les moyens (25) de particularisation va provoquer sur ces 2 organes (24) et (25) l'exécution d'un cycle écriture. Pour la mémore (24) des données ce cycle écriture va emmagasiner la donnée placée sur l'omnibus (26) des données dans l'emplacement de la mémoire (24) des données définies par l'adresse placée sur l'omnibus (23) des adresses. Pour les moyens (30) intermédiaires cette commande de cycle écriture va placer l'indicateur reçu précédemment sur l'omnibus (31) des indicateurs différés. Pour les moyens (25) de particularisation, ce cycle écriture provoque l'emmagasinage de l'indicateur placé sur l'omnibus (31) des indicateurs différés dans l'emplacement des moyens (25) de particularisation défini par l'adresse placée sur l'omnibus (23) des adresses.

Quand les moyens (28) utilisateurs veulent lire le contenu d'un emplacement de la mémoire (24) des données ils placent sur l'omnibus (23) des adresses, l'adresse de l'emplacement à lire et sur l'omnibus (29) de contrôle ils commandent un cycle de lecture. L'arrivée des signaux portés par ces 2 omnibus sur la mémoire (24) des données déclenche l'exécution du cycle lecture de la mémoire (24) des données. Ce cycle de lecture place la donnée contenue dans l'emplacement désigné par l'adresse placée sur l'omnibus (23) des adresses sur l'omnibus (26) des données. Dans le même temps les moyens (25) de particularisation reçoivent par l'omnibus (23) des adresses, l'adresse de l'emplacement lu dans la mémoire des données et par l'omnibus (29) de contrôle une commande de lecture et exécutent un cycle de lecture du contenu de l'emplacement de moyens (25) de particularisation ayant la même adresse que celle appelée dans la mémoire (24) des données. S'il existe un indicateur emmagasiné dans cet emplacement, le cycle de lecture place cet indicateur sur l'omnibus (31) des indicateurs différés. Cet omnibus (31) des indicateurs différés transmet cet indicateur aux moyens (30) intermédiaires. Pour savoir si l'adresse appelée comporte un indicateur associé, les moyens (28) d'exploitation demandent, par une commande appropriée placée sur l'omnibus (29) de contrôle aux moyens (30) intermédiaires de placer sur l'omnibus (26) des données le résultat de la lecture effectuée à l'adresse appelée dans les moyens (25) de particularisation. S'il n'y a pas d'indicateur associé aucun signal sera transmis sur l'omnibus (26) de données. S'il y a un indicateur associé, cet indicateur sera placé sur l'omnibus (26) de données.

Suivant une variante du système d'exploitation qui vient d'être décrit, les moyens (25) de particularisation après une opération de lecture du contenu d'un emplacement défini par une adresse, avertissent les moyens (28) utilisateurs en cas de détection de la présence d'un indicateur associée à l'adresse appelée. Pour cela, ils placent sur l'omnibus (29) de contrôle un signal informant les moyens (28) utilisateurs de l'existence d'un indicateur associé à la donnée appelée. Cette information des moyens (28) utilisateurs de l'existence de cet indicateur évite d'avoir à demander un cycle spécial aux moyens (30) intermédiaires.

Suivant une autre variante du système d'exploitation les moyens (25) de particularisation sont constitués d'une mémoire analogue à la mémoire (24) des données. Cette mémoire est appelée mémoire (25) des indicateurs en raison de sa ressemblance avec la mémoire (24) de données.

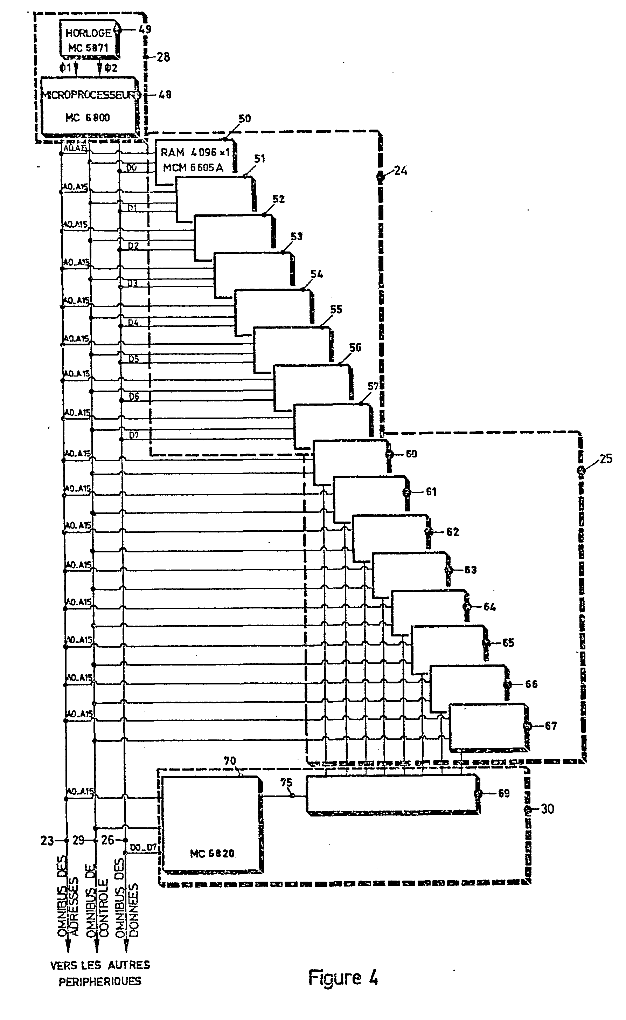

Suivant une autre variante du système d'exploitation, les moyens (30) intermédiares sont constitués d'un dispositif adressable analogue à ceux utilisés pour raccorder les moyens utilisateurs (28) de données avec des moyens périphériques; les moyens (28) intermédiaires sont considérés par les moyens (28) utilisateurs comme un moyen périphérique particulier. Le système et ses variantes seront mieux compris avec l'aide de la figure 4 qui représente un mode de réalisation préféré de l'invention réalisé autour d'un microprocesseur Motorola MC 6800.

Les moyens (28) d'utilisation sont constitués d'une horloge (49) du type Motorola MC 6871 et d'un microprocesseur (48) du type Motorola MC 6800.

L'horloge (49) MC 6871 produit deux signaux de synchronisation qui définissent les phases de fonctionnement de l'ensemble du système. Ces deux signaux sont respectivement appelés $O_1$ et $O_2$. Ces signaux sont transmis au microprocesseur (48).

Le microprocesseur (48) est relié au reste du système qu'il contrôle au moyen de trois omnibus.

—un omnibus (23) d'adresse qui véhicule l'adresse appelée par le microprocesseur (48). Il comprend 16 lignes représentant chacune un des poids binaires définissant l'adresse. Ces lignes sont référencées dans les explications qui suivent par $A_0$, $A_1$, $A_2$, $A_3$, $A_4$,...., $A_{14}$, $A_{15}$.

— un omnibus (26) des données qui assurer l'échange des données entre le microprocesseur (48) et les différents circuits qu'il contrôle. Il comprend 8 lignes représentant chacune un des poids binaires définissant la donnée faisant l'objet de l'échange. Ces lignes sont référencées par $D_0$, $D_1$, $D_2$, $D_3$, $D_4$, $D_5$, $D_6$, $D_7$.

— un omnibus (29) de contrôle permet au microprocesseur (48) d'émettre des ordres vers les circuits contrôlés et de recevoir les réponses de ceux-ci. Il comprend les lignes transportant les signaux suivants:

. les signaux d'horloge $O_1$ et $O_2$.
. le signal d'initialisation, qui sera référencé par INITIALISAT, et qui sert à remettre les circuits dans un état initial.
. le signal de commande de cycle écriture, qui sera référencé par ECRITURE et qui quand il est à un niveau haut, commande l'exécution du cycle écriture alors que quand il sera à un niveau bas, commande l'exécution d'un cycle lecture.
. le signal de validation de l'adresse placée sur l'omnibus (23) des adresses qui est référence par SELECTION.

. le signal de masquage des interruptions qui ne sera pas utilisé dans les descriptions qui vont suivre.
. le signal de demande d'interruption référencé par INTERRUPT, qui est produit par les circuits contrôlés quand ceux-ci réclamant une intervention du microprocesseur (48).

Le document technique Motorola cité plus haut donne tous les détails concernant ces signaux et leur utilisation.

La mémoire (24) des données est constituée de 8 circuits intégrés Motorola du type MCM 6605A. Ces circuits sont représentés en (50), (51), (52), (53), (54), (55), (56), (57). Chacun de ces circuits intégrés est une mémoire adressable comprenant 4096 emplacements d'une capacité de 1 bit. Le circuit (50) emmagasine les bits 0 des données, le circuit (51) emmagasine le bit 1 ainsi de suite jusqu'au circuit intégré (57) qui emmagasine le bit 7.

La mémoire (25) des indicateurs est analogue à la mémoire (24) des données. On y retrouve 8 circuits intégrés référencés (60), (61), (62), (63), (64), (65), (67). Le circuit intégré (60) emmagasine les bits 0 des indicateurs ainsi de suite jusqu'au circuit intégré (67) qui emmagasine le bit 7 des indicateurs.

Les emplacements de ces deux mémoires (24) et (25) sont adressés au moyens de l'omnibus (23) d'adresse.

La mémoire (24) des données échange les données qu'elle stocke avec le microprocesseur à travers l'omnibus (26) des données: le circuit (50) échange le bit 0 par le fil $D_0$, le circuit (51) échange le bit 1 par le fil $D_1$, ainsi de suite jusqu'au circuit (57) qui le fait par le fil $D_7$.

La mémoire (25) des indicateurs échange les bits des indicateurs avec le microprocesseur (48) à travers les moyens (30) intermédiaires qui jouent, en quelque sorte, un rôle de relais. Ces moyens (30) intermédiaires comprennent une unificateur (69) d'écriture des indicateurs, un adapteur (70) d'interface. L'adaptateur (70) d'interface est un circuit intégré Motorola du type MC 6820. Ce circuit peut supporter la connexion de 20 périphériques. Dans le système représenté sur la figure 4, il est fait usage d'une seule de ces 2 possibilités de connexion. La possibilité de connexion utilisée est employée tantôt en mode lecture tantôt en mode écriture suivant les commandes du microprocesseur. Bien entendu, il est parfaitement possible d'utiliser les 2 possibilités de connexions et dans ce cas chacune des possibilités de connexion est réservée à une mode de fonctionnement: une des possibilités est réservée au mode écriture, l'autre possibilité est réservée au mode lecture.

Le fonctionnement des circuits intégrés (50 à 57), (60 à 67) et (70) est décrit dans la documentation du constructeur. Le fonctionnement de l'unificateur (69) d'éciture est expliqué ci-après.

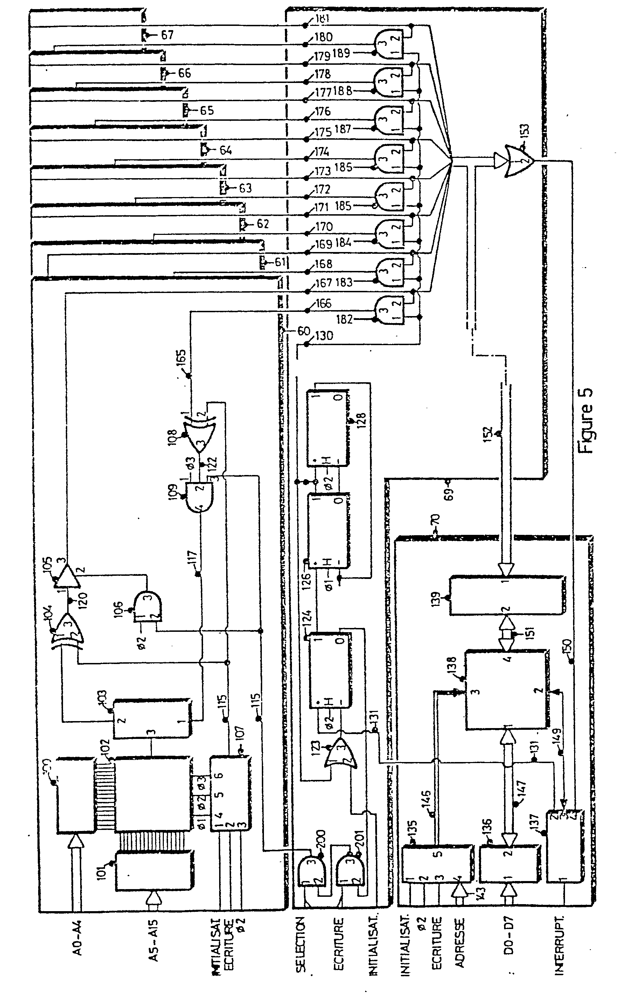

La figure 5 est destinée à illustrer le fonctionnement de l'unificateur (69) d'écriture. Sur cette figure sont donc représentés exclusivement les circuits directement impliqués par le fonctionnement de cet unificateur (69) à savoir:

. les 8 circuits intégrés (60, 61, 62, 63, 64, 65, 66, 67) constituant la mémoire (25) des indicateurs.
. le circuit intégré (70) qui est le circuit adaptateur d'interface,
. le contrôleur (69) d'écriture des indicateurs,
. les omnibus ne sont pas représentés mais les lignes utilisées sont désignées par leur appellation mnémonique: $A_0$..., $A_{15}$ pour les lignes de l'omnibus (23) d'adresse, $D_0$,..., $D_7$ pour les lignes de l'omnibus (26) des données, INITIALISAT, ECRITURE $O_1$, $O_2$, INTERRUPT pour les lignes de l'omnibus (29) de contrôle.

Seul le circuit intégré (60) est représenté en détail sur cette figure. La partie centrale est le réseau (102) des cellules de mémorisation. La cellule à atteindre pour la lecture ou l'écriture, est adressée d'une part par le décodeur (100) de colonne et d'autre part par le décodeur (101) à de ligne. Le décodeur (100) de colonne est alimenté par les fils $A_0$, $A_1$, $A_2$, $A_3$, $A_4$ de l'omnibus (23) des adresses. Le décodeur (101) de ligne est alimenté par les fils $A_5$ à $A_{15}$ de l'omnibus (23) des adresses. En (107) est représentée l'horloge interne ce de circuit intégré (60). Cette horloge (107) interne reçoit sur on entrée (1) le signal d'initialisation "INITIALISAT", sur son entrée (2) le signal "ECRITURE" et sur son entrée (3) le signal d'horloge "$O_2$". Les sorties de cette horloge (107) interne sont: en (4) le signal d'horloge "$O_1$" et en (6) le signal d'horloge "$O_3$" Ces trois signaux d-horloge "$O_1$", "$O_2$, et "$O_3$" viennent alimenter le réseau (102) des cellules de mémorisation pour contrôler les phases de fonctionnement de ces dites cellules de mémorisation. En (103) sont représentés les circuits d'entrée-sortie de données de la mémoire. Ces circuits (103) d'entrée-sortie reçoivent sur leur entrée (1) la valeur du bit à enregistrement dans le cas d'un cycle écriture ou la valeur du bit à enregistrer dans le cas d'un cycle de rafraîchissement. La sortie (2) du circuit (103) d'entrée-sortie transmet la valeur du bit lu à l'emplacement sélectionné par l'adresse dans le cas d'un cycle de lecture dans le cas d'un cycle de rafraîchissement. La borne (3) du circuit (105) est reliée au réseau (102) des cellules de mémorisation. Dans le cas d'un cycle d'écriture ou d'un cycle de rafraîchissement, cette borne (3) du circuit (103) d'entrée-sortie enverra vers le réseau (102) des cellules de mémorisation la valeur du bit à enregistrer ou à réenregistrer. Dans le cas d'un cycle de lecture cette borne (3) recevra du réseau (102) des cellules de mémorisation la valeur du bit contenu dans la cellule sélectionnée par les décodeurs (100) et (101). La borne (1) du circuit (103) d'entrée-sortie est alimentée par la sortie (4) du conditionneur (109). Ce conditionneur (109) reçoit sur sa borne (1) le signal d'horloge "$O_3$" issu de l'horloge (107) interne, sur sa borne (2) un signal émis par la sortie (3) du circuit (108) Ou-EXCLUSIF et sur sa borne (3) un signal de sélection émis par le contrôleur (69) d'écriture des indicateurs. Le circuit (108) OU-EXCLUSIF reçoit sur son entrée (1) la valeur du bit à emmagasiner, dans le cas d'une écriture, émis par le contrôleur (69) d'écriture des indicateurs. La borne (2) du circuit (103) d'entrée-sortie alimente l'entrée du circuit (104) OU-EXCLUSIF. Ce circuit (104) OU-EXCLUSIF reçoit sur son entrée (2) un signal émis par l'horloge (107) interne. La sortie (3) de ce circuit (104) alimente l'entrée (1) de l'amplificateur (105) contrôlé. Cet amplificateur (105) contrôlé reçoit sur son entrée (2) de contrôle un signal émis par le conditionneur (123) et sa sortie (3) envoie, dans le cas d'un cycle lecture, la valeur du bit lu vers le contrôleur (69) d'écriture des indicateurs. Le conditionneur (123) reçoit sur son entrée (1) le signal d'horloge $O_2$ et sur son entrée (2) un signal de sélection émis par le contrôleur (69) d'écriture des indicateurs.

Comme il a été dit auparavant, le circuit intégré (70) référencé Motorola 6820 est prévu par le constructeur pour le raccordement de 2 périphériques au omnibus (23), (26) et (29). Dans le mode de réalisation décrit dans cet exemple, il n'est utilisé qu'une seule de ces possibilités de raccordement. Dans les figures ne sont représentés que les ensembles fonctionnels mis en cause par l'invention. Ces ensembles sont au nombre de 5. Un bloc (135) de contrôle de fonction, un registre (136) tampon amont, un bloc (137) de contrôle des interruptions, un bloc (138) de contrôle de transfert et un registre (139) tampon aval. Une liaison (146) multiple relie la borne (5) du bloc (135) de contrôle de fonction et la borne (3) multiple du bloc (138) du contrôle de transfert. Un omnibus (147) relie la borne (2) multiple du registre (136) tampon amont et la borne (1) multiple du bloc (138) de contrôle du transfert. Un omnibus (151) relie la borne (4) multiple du bloc (138) de contrôle du transfert et la borne (2) multiple du registre (139) tampon aval. Une liaison (149) multifilaire relie la borne (2) multifilaire du bloc (138) de contrôle de transfert et la borne (3) multifilaire du bloc (137) de contrôle des interruptions. Le bloc (135) de contrôle de transfert comporte en outre 4 bornes dont 1 borne multiple. Sur la borne (1) arrive la ligne d'initialisation INITIALISAT. Sur la borne (2) arrive la ligne de distribution d'horloge $O_2$. Sur la borne (3) arrive la ligne de commande d'écriture ECRITURE. Sur la borne (4) multifilaire arrivent 4 lignes de l'omnibus (23) d'adresses $A_0$, $A_1$, $A_{11}$, $A_{15}$ et une ligne de validation SELECTION. Le registre (136) tampon amont reçoit sur sa borne (1) multifilaire 8 lignes $D_0$,..., $D_7$ en amont de l'omnibus (26) des données. Le bloc (137) de contrôle des interruptions reçoit sur sa borne (1) une ligne de demande d'interruption INTERRUPT, sur sa borne (2) une ligne (131) reliée à l'entrée (+) de bistable (124) de l'unificateur (69) d'écriture et sur sa borne (3) une liaison (150) reliée à la sortie (2) du mélangeur (153) de l'unificateur d'écriture. Le registre (139) tampon reçoit sur sa borne (1) multifilaire un omnibus (152) relié à la borne (1) du mélangeur (153) et aux bornes (2) des différents conditionneurs (182 à 189) suivant une répartition qui sera définie ci-après.

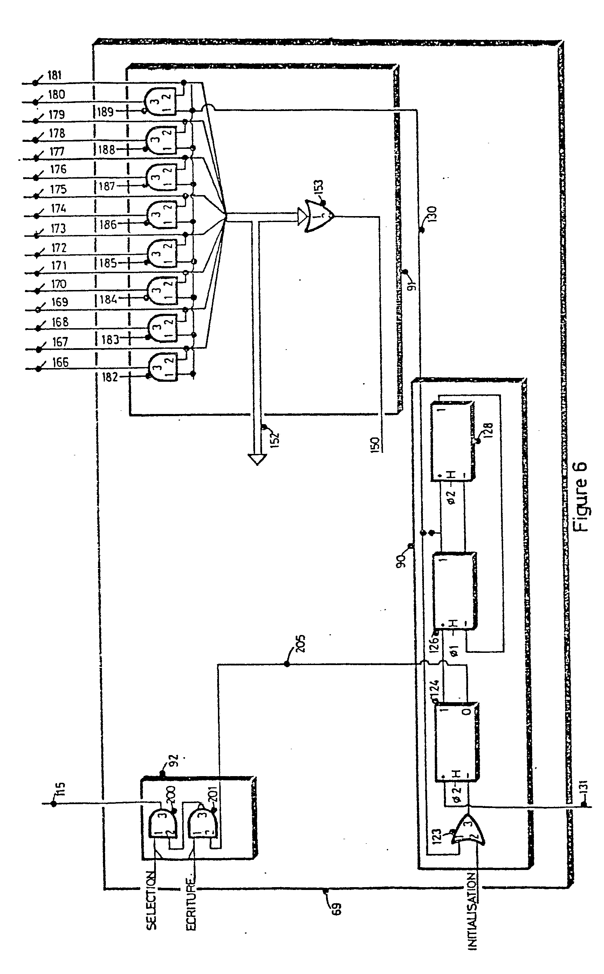

L'unificateur (69) d'écriture est également représenté sur la figure 6. Sur cette figure les circuits de l'unificateur sont regroupés suivant leur fonction. Le bloc (90) est le bloc de contrôle de l'unicité d'écriture, le bloc (91) est le bloc de contrôle des échanges entre la mémoire (25) des indicateurs et l'adaptateur (70) d'interface, et le bloc (92) est le bloc de contrôle des opérations d'écriture dans la mémoire (25) des indicateurs. Sur la figure les bistables sont représentés avec la convection suivante: les deux entrées de signaux sont indiquées par les signes (+) et (—) et les sorties par les signes (1) et (0). Le bistable comporte une entrée horloge indiquée par la lettre (H).

Le bloc (90) de contrôle de l'unicité d'écriture comprend le mélangeur (123), le bistable (124), le bistable (126) et le bistable (128). La borne (1) du mélangeur (123) reçoit la ligne (130) en amont de la sortie (1) du bistable (126) et la borne (2) reçoit la ligne d'initialisation INITIALISAT en amont de l'omnibus (29) de contrôle. La sortie (3) du mélangeur (123) est reliée à l'entrée (—) du bistable (124). L'entrée (+) du bistable (124) est reliée à la liaison (131). La sortie (1) du bistable (124) est reliée à l'entrée (+) du bistable (126). La sortie (0) du bistable (124) alimente la ligne (205) qui aboutit sur l'entrée (1) des conditionneurs (201) des circuits (60 à 67) intégrés de la mémoire (25) des indicateurs. L'entrée (—) du bistable (126) est reliée à la sortie (1) du bistable (128). La sortie (1) du bistable (126) est reliée à l'entrée (+) du bistable (128) et la sortie (0) du bistable (126) est reliée à l'entrée (—) du bistable (128). Les bistables (124) et (128) reçoivent sur leur entrée H le signal d'horloge $O_2$ et le bistable (126) reçoit sur son entrée H le signal d'horloge $O_1$.

Le bloc (92) de contrôle des opérations d'écriture est composé d'un conditionneur (200) et d'un conditionneur (201) à sortie inversée. Le conditionneur (201) à sortie inversée reçoit sur son entrée (1) la ligne de commande d'écriture "ECRITURE" et sur son entrée (2) la ligne (205) qui émane de la sortie (0) du bistable (124). La sortie de ce conditionneur est reliée à l'entrée (2) du conditionneur (200) qui reçoit sur son entrée (1) la ligne de validation SELECTION. La sortie (3) de ce conditionneur alimente la ligne (115) qui aboutit sur l'entrée (3) du conditionneur (109).

Le bloc (91) de contrôle des échanges comprend un mélangeur (153) et huit conditionneurs (182 à 189). L'omnibus (152) qui émane du registre (139) tampon aval est raccordé au mélangeur (153) et aux conditionneurs (182 à 189) de la façon suivante: l'omnibus (152) comprend 8 lignes correspondant à travers l'adaptateur (70) d'interface aux 8 lignes de l'omnibus (26) de données. La borne (1) du mélangeur (153) comprend 8 entrées raccordées chacune à une ligne différente de l'omnibus (142). En ce qui concerne les conditionneurs (182 à 189) l'entrée (2) de chaque conditionneur est raccordée à une ligne différente: le conditionneur (182) à la ligne correspondant à $D_0$,.... le conditionneur (189) à la ligne correspondant à $D_7$. Chacune des lignes est prolongée respectivement vers le circuit intégré correspondant au bit concerné: la ligne (167) vers le circuit (60), la ligne (169) vers le circuit (61), la ligne (171) vers le circuit (62) la ligne (172) vers le circuit (63), la ligne (175) vers le circuit (63), la ligne (175) vers le circuit (64), la ligne (177) vers le circuit (65), la ligne (179) vers le circuit (66) et la ligne (181) vers le circuit (67). Les sorties (3) des conditionneurs (182 à 189) sont raccordées respectivement au circuit intégré correspondant au bit concerné: la ligne (166) au circuit (60), la ligne (168) au circuit (61), la ligne (170) au circuit (62), la ligne (172) au circuit (63), la ligne (174), au circuit (64), la ligne (176) au circuit (65), la ligne (178) au circuit (66) et la ligne (180) au circuit (67).

Dans la description du fonctionnement des circuits, il ne sera pas donné d'explication détaillée du fonctionnement des circuits intégrés (60, 61, 62, 63, 64, 65, 66, 67, 70). Celui-ci est décrit en détail dans les différentes documentations fournies par le constructeur Motorola. Les explications qui vont suivre sont limitées à l'explication du fonctionnement des circuits spécifiques à l'invention.

Il est à noter que pour des raisons technologiques la documentation Motorola utilise quelquefois les signaux inversés que l'on appelle signaux inverses par opposition aux signaux directs. C'est le cas par exemple, pour le signal d'initialisation qui est signal RESET. Pour la clarté de l'exposé et pour simplifier les explication, il ne sera considéré dans ce qui suit que les valeurs directes des signaux étant bien entendu que dans le fonctionnement réel, c'est la valeur appropriée que est utilisée. Par exemple, dans les explications qui vont suivre, on dit que l'initialisation est faite par un signal INITIALISAT qui est un signal direct.

L'initialisation du contrôleur (69) d'unification d'écriture se fait en appliquant un signal INITIALISAT sur l'entrée (2) du mélangeur (123). Ce signal traverse le mélangeur (123) pour entrer par la borne (—) du bistable (124) qui est synchronisé par le signal d'horloge $O_2$. Le bistable (124) va donc voir sa sortie (1) basculer à zéro sur le front descendant du signal d'horloge $O_2$. L'initialisation n'a aucun effet sur les bistables (126) et (128) car ces deux bistables s'initialisent mutuellement.

En effet, si la sortie (7) du bistable (126) est haute, cela suppose que la sortie (1) du bistable est reliée à l'entrée (—) du bistable (126). Donc si la sortie (1) du bistable (126) est un niveau haut, ce niveau est transmis à l'entrée (+) du bistable (128). Ceci provoque le basculement à un niveau bas de la sortie (1) du bistable (126). L'initialisation est réalisée automatiquement.

Dans un premier temps, il est examiné le fonctionnement de l'invention dans le cas de l'écriture d'un indicateur dans la mémoire (25) des indicateurs.

Quand la microprocesseur (48) veut charger un indicateur dans la mémoire (25) des indicateurs, il doit procéder à deux opérations. D'avord, il doit charger l'indicateur dans le circuit (70) d'adaptation d'interface. Ensuite, il doit commander un cycle écriture à la mémoire (24) des données. Ce cycle écriture doit être effectué à l'adresse à particulariser. L'exécution de ce cycle d'écriture dans la mémoire (24) des données entraîne l'exécution en parallèle d'un cycle d'écriture dans la mémoire (25) des indicateurs. Au cours de ce cycle d'écriture parallèle, l'indicateur qui se trouvait stocké dans le circuit (70) d'adaptation d'interface est emmagasiné dans l'adresse associée de la mémoire (25) des indicateurs.

Pour charger l'indicateur dans le circuit (70) d'adaptation d'interface, le microprocesseur (48) effectue les opérations suivantes:

. Il place l'adresse du circuit (70) d'adaptation d'interface sur l'omnibus d'adresse. Pour un circuit (70) d'adaptation d'interface du type Motorola MC 6820 (0980) cette adresse est définie par les lignes $A_0$, $A_1$, $A_{11}$ et $A_{15}$ qui sont raccordées respectivement aux bornes $RS_0$, $RS_1$, $CS_0$, $CS_2$ du circuit (70) d'adaptation d'interface.

. Il place sur l'omnibus (26) des données la configuration de l'indicateur à charger à l'adresse associée: le bit 0 sur la ligne $D_0$,... le bit 7 sur la ligne $D_7$.

. Il place dans l'omnibus (29) de contrôle:

. un signal de commande de cycle écriture sur la ligne référencée ECRITURE. Quand cette ligne est portée à une tension positive cela signifie que le processeur (48) demand un cycle écriture, si cette ligne est portée à une tension nulle c'est un cycle lecture qui est demandé.

. un signal de validation sur la ligne référencée SELECTION. Ce signal autorise le transfert de l'adresse dans le circuit (70) d'adaptation d'interface.

. un signal d'horloge $O_2$ pour synchroniser le fonctionnement du circuit (70) d'adaptation d'interface.

Le bloc (135) de contrôle de fonction ayant reconnu son adresse sur sa borne (4) multiple et recevant sur sa borne (3) un ordre d'écriture, place sur sa borne (5) multiple les commandes à transmettre au bloc (138) de contrôle de transfert. Ces commandes sont transmises à travers la liaison (146) multifilaire jusqu'à la borne (3) du bloc (138) de contrôle de transfert. En réponse à ces commandes, le bloc (138) de contrôle de transfert organise les circuits internes du circuit (70) d'adaptation d'interface pour que le contenu du registre (136) tampon amont soit transmis au registre (139) tampon aval à travers la liaison (147) multifilaire, puis à travers le bloc (138) de contrôle de transfert et enfin à travers la liaison (151) multifilaire. De la sorte, la configuration de l'indicateur $D_0$ à $D_7$ qui a été placée sur l'omnibus (26) des données se trouve contenue dans le registre (139) tampon aval. Ce registre (139) tampon aval transmet sur sa borne (1) multiple et de là, à travers la liaison (152) multifiliare, la configuration $D_0$ à $D_7$ de l'indicateur vers le contrôleur (69) d'unification d'écriture. Par ailleurs, le bloc (138) de contrôle du transfert informe le bloc (137) de contrôle des interrupteurs de la bonne exécution du transfert de l'indicateur dans le registre (139) tampon aval. Pour cela le bloc (138) de contrôle du transfert place un signal de bonne exécution du transfert sur sa borne (2), ce signal à travers la liaison (149) entre dans la borne (3) du bloc (137) de contrôle des interruptions. En réponse à ce signal le bloc (137) de contrôle des interruptions transmet, à partir de sa borne (2) et à travers la liaison (131), au contrôleur (69) d'unification d'écriture un signal informant ce dernier que la configuration de l'indicateur se trouve disponible sur la liaison (152). En résumé, le circuit (70) d'adaptation d'interface a placé la configuration de l'indicateur sur la liaison (152) et en a informé par la liaison (131) le contrôleur (69) d'unification d'écriture.

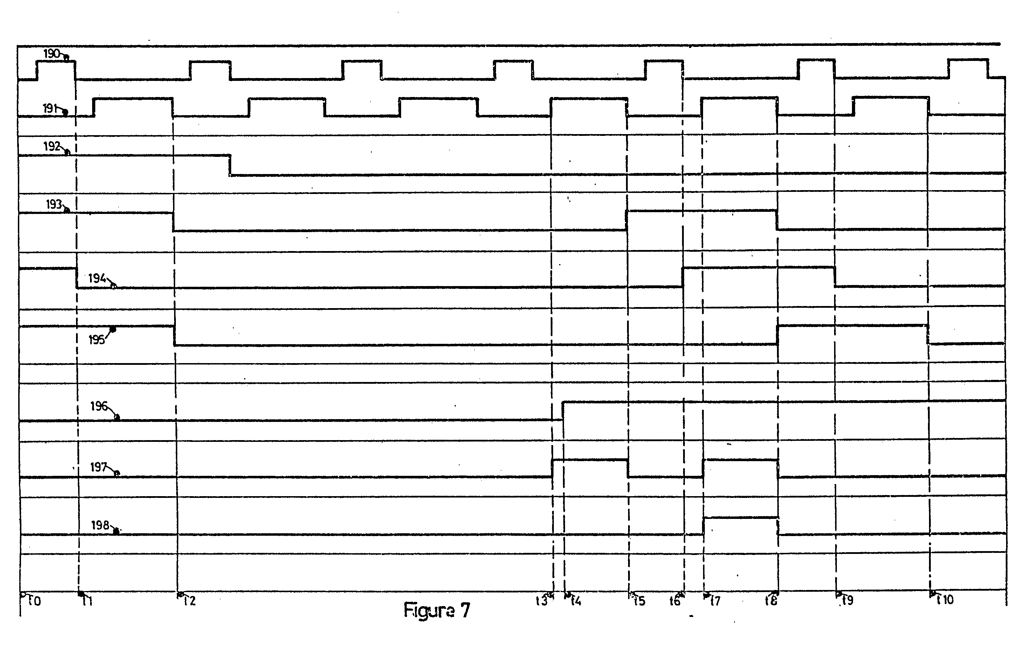

Le microprocesseur (48) au cours de l'opération précédente a transmis à l'adaptateur (70) d'interface la configuration de l'indicateur à emmagasiner dans la mémoire (25) des indicateurs. Dès que ce transfert est effectué il a été vu que le bloc (137) de contrôle des interruptions en informe le contrôleur (69) d'unification d'ecriture en envoyant un signal sur la liaison (131) qui arrive sur la borne (+) du bistable (124) qui se trouve dans le bloc (90) de contrôle de l'unicité d'écriture. Sous l'action de cette sollicitation, le bistable (124) bascule et sa sortie (1) passe à un niveau haut sur le front descendant du signal d'horloge $O_2$. Ce niveau haut signifie pour le bloc (90) de contrôle d'unicité d'écriture que la configuration de l'indicateur est disponible à la sortie du circuit (70) d'adaptation d'interface sur l'omnibus (152). La sortie (1) du bistable (124) est reliée à l'entrée (+) du bistable (126): le bistable (126) bascule donc et sa sortie (1) va passer à un niveau haut sur le front descendant de l'horloge $O_1$. La sortie (1) du bistable (126) est reliée à la ligne (130). Cette ligne (130) quand elle est haute autorise le passage de la configuration contenue dans l'omnibus (152) à travers la série des conditionneurs (182, 183, 184, 185, 186, 187, 188, 189) qui contrôlent le passage vers les lignes (166, 168, 170, 172, 174, 176, 178, 180) d'entrée des bits dans les circuits (60, 61, 62, 63, 64, 65, 66, 67). Les conditionneurs (182,..., 189) restent donc ouverts pendant tout le temps où la sortie (1) de bistable (126) est à un niveau haut. C'est le temps qui est mis à profit par le microprocesseur pour demander un cycle écriture dans la mémoire (24) des données et dans la mémoire (25) des indicateurs. Ce cycle nous le verrons plus loin, est contrôlé par le bloc (92) de contrôle des opérations d'écriture. Le bistable (128) a son entrée (+) reliée à la sortie (1) du bistable (126): le passage à un niveau haut de cette sortie fait basculer le bistable (128) dont la sortie (1) passe à un niveau haut sur le front descendant du signal d'horloge $O_2$. Cette sortie haute signifie qu'il peut être procédé à l'écriture de la configuration de l'indicateur. La sortie (1) de bistable (128) entre dans l'entrée (—) du bistable (126) dont la sortie (1) passe à un niveau bas sur le front descendant du signal d'horloge $O_1$. La sortie (0) du bistable (126) est passée à un niveau haut et transmet ce niveau à l'entrée (—) du bistable (128) qui bascule: sa sortie (1) passe à un niveau bas. Le bloc (90) du contrôle de l'unicité de l'écriture a été ramené à son état initial. La sortie (1) du bistable (126), qui commande la ligne (130), se trouvant à un niveau bas ferme les conditionneurs (182 à 189) du bloc (91) de contrôle des échanges entre la mémoire (25) des indicateurs et le circuit (70) d'adaptation d'interface. La fermeture de ces conditionneurs isole donc la mémoire (25) des indicateurs du circuit (70) d'adaptation d'interface. Les conditionneurs n'ont été ouverts que pendant la durée d'un cycle écriture comme cela apparaîtra clairement sur la figure 7 qui illustre le chronogramme des signaux mis en cause pendant un cycle d'écriture en mémoire (25) des indicateurs.

Le bloc (92) de contrôle des opérations d'écriture reçoit du bloc (90) de contrôle de l'unicité d'écriture une ligne (205) qui émane de la borne (0) du bistable (124) et qui aboutit sur l'entrée (2) du conditionneur (201) à sortie inversée. Quand la sortie (1) du bistable (124) est à une valeur basse, ce qui signifie qu'il n'y a pas de configuration d'indicateur disponible dans le circuit (70) adaptateur d'interface, la sortie (0) de ce bistable est à une valeur haute. Dans ces conditions, l'entrée (2) du conditionneur (201) reçoit un signal positif. Si une commande d'écriture ECRITURE est envoyée par le microprocesseur (48) sur l'entrée (1) du conditionneur (201), la sortie (3) de celui-ci est basse puisque les 2 conditions d'entrée sont satisfaites. La sortie (3) du conditionneur (201) retransmet le niveau bas à l'entrée (2) du conditionneur (200) qui par conséquent se trouve fermé. Le conditionneur (200) étant fermé le signal de validation SELECTION n'est pas transmis à la sortie (3) de ce conditionneur et donc n'est pas transmis sur la ligne (115) qui commande les conditionneurs (109) et (123) de la mémoire (25) des indicateurs. Comme il est expliqué dans les documents Motorola concernant les circuits MCM 6605A, l'absence du signal SELECTION en présence d'une commande ECRITURE provoque l'exécution d'un cycle de rafraîchissement du contenu de l'adresse appelée. On voit donc que l'appel d'un cycle écriture en l'absence d'une configuration d'indicateur dans le circuit (70) d'adaptation d'interface provoque un cycle de rafraîchissement: il n'y a pas altération du contenu de la mémoire (25) des indicateurs, bien au contraire, il y a restauration du niveau des signaux emmagasinés.

Dans le cas où le bloc (92) de contrôle des opérations d'écriture reçoit sur la ligne (205) un signal de niveau bas ce qui signifie qu'une configuration d'indicateur se trouve disponible à la sortie du circuit (70) d'adaptation d'interface, la sortie (3) du conditionneur (201) est une valeur haute puisque son entrée (2) est à une valeur basse. Le conditionneur (200) est donc ouvert et le signal de validation SELECTION le traverse pour alimenter la ligne (115). La ligne (115) étant à un niveau haut, la mémoire (25) des indicateurs peut exécuter un cycle d'écriture normal.

Dans le cas où le bloc (92) de contrôle des opérations d'écriture reçoit sur la borne (1) du conditionneur (201) un signal à niveau bas, ce qui signifie qu'il s'agit d'un cycle de lecture, la sortie (3) du conditionneur (201) se trouve portée à un niveau haut. Comme précédemment, le conditionneur (200) sera ouvert et la mémoire (25) des indicateurs peut exécuter un cycle de lecture puisque le signal de validation SELECTION peut porter la ligne (115) à un niveau haut.

Le bloc (91) de contrôle des échanges entre la mémoire (25) des indicateurs et le circuit (70) d'adaptation d'interface contrôle ces échanges aussi bien dans le cas de l'écriture que dans celui de la lecture.

Dans le cas de la fonction écriture, il a été vu que le circuit (70) d'adaptation d'interface place la configuration de l'indicateur à mémoriser sur l'omnibus (152) qui est raccordé ligne par ligne aux conditionneurs (182 à 189): la ligne correspondant au bit 0 de l'indicateur arrive sur l'entrée (1) du conditionneur (182) et ainsi de suite jusqu'à la ligne correspondant au bit 7 qui arrive sur l'entrée (1) du conditionneur (189). Les conditionneurs (182 à 189) sont contrôlés par leurs entrées (2) qui sont raccordés à la ligne (130). Il a été vu que cette ligne (130) est à un niveau haut pendant la durée d'un cycle écriture sous réserve qu'une configuration d'indicateur soit disponible sur l'omnibus (152). Si cette condition est requise la ligne (130) se trouve à un niveau haut et le contenu des lignes sera transmis au circuit (60 à 67) intégré qui lui correspond à partir des sorties (3) des conditionneurs (182 à 189) et à travers les lignes (166, 168, 170, 172, 174, 176, 178, 180).

Si la configuration de l'indicateur n'est pas disponible à la sortie du circuit (70) d'adaptateur d'interface, la ligne (130) sera portée à un niveau bas, les conditionneurs (181 à 189) seront fermés; la communication entre le circuit (70) d'adaptation d'interface et la mémoire (25) des indicateurs est coupée.

Dans le cas d'un cycle de lecture, la mémoire (25) des indicateurs place les bits lus par les circuits (60 à 69) intégrés sur les lignes (167, 169, 171, 173, 175, 177, 179, 181), le bit 0 sur la ligne 167 ainsi de suite jusqu'au bit 7 sur la ligne (181). Ces lignes arrivent directement d'une part sur l'omnibus (152) et d'autre part sur la borne (1) multiple du mélangeur (153). L'omnibus (152) place la configuration lue dans la mémoire (25) des indicateurs à la borne (1) multiple du registre (139) tampon aval. Le mélangeur (153) place sur sa borne (2) un signal à niveau haut si au moins un des signaux placé à son entrée a un niveau haut. Ce signal est transmis par la ligne (150) à la borne (4) du bloc (137). Ce bloc (137) engendre un signal à niveau haut sur sa borne (1) qui est raccordée à la ligne de demande d'interruption INTERRUPT. De la sorte, le microprocesseur (48) est informé de la présence d'une configuration d'un indicateur disponible à l'entrée du circuit (70) d'adaptation d'interface.

Dans le cas où toutes les lignes raccordées à l'entrée (1) du mélangeur (153) sont à niveau bas, cela signifie qu'il n'y a pas d'indicateur à l'adresse associée à l'adresse lue, la sortie (2) du mélangeur reste à un niveau bas et il n'y a pas de demande d'interruption.

La figure 7 représente le chronogramme des principaux signaux électriques mis en oeuvre dans les circuits précédents au cours de l'écriture d'un indicateur en mémoire (25) des indicateurs.

Les signaux représentés sont:

— en (190) le signal d'horloge $O_1$,
— en (191) le signal d'horloge $O_2$,
— en (192) le signal d'initialisation INITIALISAT,
— en (193) le signal à la sortie (1) du bistable (124),
— en (194) le signal à la sortie (1) du bistable (126),
— en (195) le signal à la sortie (1) du bistable (128),
— en (196) le signal véhiculé par la liaison (131),
— en (197) le signal de commande de cycle d'écriture ECRITURE,
— en (198) le signal de sélection de la mémoire SELECTION.

L'instant $t_0$ est l'instant de mise en route du système. Il a été expliqué précédemment que les bistables (126) et (128) s'auto-initialisent. Sur la figure, il a été représenté le cas où le bistable (126) et le bistable (128) ont leur sortie (1) en position haute. Le bistable (128) ayant sa sortie (1) à une valeur haute, le bistable (126) va basculer et sa sortie (1) va passer à une valeur basse à l'instant $t_1$ sur le signal (194). Ensuite, le bistable (126) étant initialisé sa sortie (0) va faire basculer le bistable (128) dont la sortie (1) va passer à une valeur basse sur le front descendant du signal d'horloge $O_2$: c'est ce qui se passe à l'instant $t_2$ sur le signal (195).

Le signal d'initialisation INITIALISAT étant appliqué à l'entrée (—) du bistable (124) ce bistable bascule et sa sortie (1) passe à une valeur basse sur le front descendant du signal d'horloge $O_2$: c'est ce qui se passe à l'instant $t_2$ sur le signal (193). Après ce temps $t_2$ les circuits du contrôleur (69) d'unification d'écriture sont initialisés et le signal d'initialisation peut cesser.

A l'instant $t_3$ le microprocesseur (48) demande un cycle d'écriture dans le circuit (70) adaptateur d'interface pour y charger la configuration d'un indicateur. Pour cela, il envoie un signal (197) de commande d'écriture ECRITURE. Sous cette commande la configuration de l'indicateur est transférée de l'omnibus (26) des données dans le circuit (70) adaptateur d'interface. Quand ce transfert est effectuée le circuit (70) adaptateur d'interface envoie sur la liaison (131) un signal (196) pour informer le contrôleur (69) d'unification de cycle de la disponibilité de cette configuration sur l'omnibus (152): c'est ce qui se passe à l'instant $t_4$ sur le signal (196).

Ce signal (196) est appliqué à l'entrée (+) du bistable (124) qui bascule sur le front descendant du signal d'horloge $O_2$: c'est ce qui se passe à l'instant $t_5$ sur le signal (193). La sortie (7) du bistable (124) étant à une valeur haute fait basculer le bistable (126) sur le front descendant du signal d'horloge $O_1$: c'est ce qui se passe à l'instant $t_6$ sur le signal (194).

Ce signal (194) haut signifie que l'écriture de l'indicateur en mémoire (25) des indicateurs est possible. Le microprocesseur (48) commande de l'exécution d'un cycle d'écriture en mémoire (25) des indicateurs en plaçant sur le signal (197) une impulsion ECRITURE située entre $t_7$ et $t_8$. Pendant le même intervalle de temps, le microprocesseur (48) valide le cycle écriture en mémoire (25) des indicateurs en plaçant sur le signal (198) une impulsion SELECTION qui autorisera l'exécution du cycle écriture.

La sortie (1) du bistable (126) étant haute, celle-ci fait basculer le bistable (128) sur le front descendant du signal de l'horloge $O_2$, c'est ce que se passe à l'instant $t_8$ sur le signal (195). En même temps, la sortie (1) du bistable (126) alimente la liaison (130) qui d'une part alimente le bloc (91) de contrôle des échanges et d'autre part alimente l'entrée (—) du bistable (124) qui bascule sur le front descendant du signal d'horloge $O_2$: c'est ce qui se passage à l'instant $t_8$ sur le signal (193). La sortie (1) du bistable (124) est devenue basse.

La sortie (1) du bistable (128) étant haute va faire basculer le bistable (126) sur le front descendant du signal d'horloge O₁, c'est ce qui se passe à l'instant $t_9$ sur le signal (194). Le basculement de ce bistable fait passer à un niveau bas le signal (194) qui est véhiculé par la liaison (130) et qui commande la communication entre le circuit (70) adapteur d'interface et la mémoire (25) des indicateurs, le niveau bas signifie que la communication est coupée.

La sortie (0) du bistable (126) étant devenue haute, celle-ci fait basculer le bistable (128) dont la sortie (1) passe à un niveau bas sur le front descendant du signal d'horloge O₂: c'est ce qui se produit à l'instant $t_{10}$ sur le signal (195). Le contrôleur (69) d'unification d'écriture est revenue à l'état où il se trouvait avant l'instant et il est prêt à satisfaire une nouvelle demande de cycle d'écriture d'un indicateur dans la mémoire (25) des indicateurs.

## Revendication

1. Appareil de traitement de données comportant des moyens utilisateurs (28) et deux mémoires à accès direct dont la première (24) contient des données et la deuxième (25) des données supplémentaires associées aux données ayant la même adresse caractérisé par des moyens intermédiaires (30) qui sont reliés:

d'une part aux moyens utilisateurs (28) au moyen d'un bus d'adresse (23) comme pour les deux mémoires et au moyen d'un bus de données (26) comme pour la première mémoire

d'autre part, à la deuxième mémoire au moyen d'un bus des indicateurs (31) différés, de façon à ce que, en fonctionnement dans le mode écriture

pendant un premier cycle et sous le contrôle du bus d'adresses les données supplémentaires sont transférées depuis les moyens utilisateurs vers les moyens intermédiaires par le bus des données et, pendant un deuxième cycle et sous le contrôle du bus d'adresses sont transférés

d'une part, les données entre les moyens utilisateurs at la première mémoire à traves le bus de données, d'autre part les données supplémentaires entre les moyens intermédiaires et la deuxième mémoire à travers le bus des indicateurs différés,

en fonctionnement dans le mode lecture les cycles et les transferts de données sont inversés par rapport à ceux du mode écriture.

## Patentanspruche

1. Datenverarbeitungsgerät mit Verwertungsmitteln (28) und zwei Direktzugriffsspeichern, von denen der erste (24) Daten und der zweite (25) zusätzliche Daten enthält, die den Daten zugeordnet sind, welche dieselbe Adresse aufweisen, gekennzeichnet, durch Zwischenmittel (30), die verbunden sind:

einerseits mit den Verwertungsmitteln (28), und zwar über einen Adreßbus (23) wie für die beiden Speicher sowie über einen Datenbus (26) wie für den ersten Speicher,

und andrerseits über einen Bus für verzögerte Hinweiswörter (31) mit dem zweiten Speicher, so daß

im Schreibbetrieb währen eines ersten Zyklus und unter Steuerung durch den Adreßbus die zusätzlichen Daten aus den Verwertungsmitteln zu den Zwischenmitteln über den Datenbus überführt werden und während eines zweiten Zyklus sowie unter Steuerung durch den Adreßbus

zum einen die Daten zwischen den Verwertungsmitteln und dem ersten Speicher über den Datenbus überführt werden und zum anderen die zusätzlichen Daten zwischen den Zwischenmitteln und dem zweiten Speicher über den Bus für verzogerte Hinweiswörter überführt werden,

und im Lesebetrieb die Zyklen sowie die Datenüberführungen genenüber denen im Schreibbetrieb invertiert werden.

## Claim

1. Data processing apparatus comprising utilisation means (28) and two direct access memories, of which the first (24) contains data and the second (25) supplementary data associated with the data having the same address, characterised by intermediate means (30) which are connected on the one hand to the utilisation means (28) via an address bus (23) as for the two memories and via a data bus (26) as for the first memory, on the other hand to the second memory by means of a deferred indicator bus (31), in such a manner that in operation in the write mode during a first cycle and under control of the address bus, the supplementary data are transferred from the utilisation means to the intermediate means via the data bus, and during a second cycle and under the control of the address bus on the one hand the data are transferred between the utilisation means and the first memory via the data bus, and on the other hand, the supplementary data are transferred between the intermediate means and the second memory via the deferred indicator bus the cycles and data transfers being reversed during operation in the read mode with respect to those of the write mode.

Figure 1

Figure 2

Figure 3

ADRESSE

0 017 586

Figure 4

Figure 5

Figure 6

0 017 586

Figure 7

0 017 586